(19) Europäisches Patentamt
European Patent Office
Office européen des brevets

(11) Veröffentlichungsnummer : **0 475 906 A1**

(12) # EUROPÄISCHE PATENTANMELDUNG

(21) Anmeldenummer : **91810711.1**

(51) Int. Cl.[5] : **C08K 5/3432,** C09B 55/00

(22) Anmeldetag : **05.09.91**

(30) Priorität : **14.09.90 CH 2991/90**

(43) Veröffentlichungstag der Anmeldung : **18.03.92 Patentblatt 92/12**

(84) Benannte Vertragsstaaten : **CH DE FR GB LI**

(71) Anmelder : **CIBA-GEIGY AG**
**Klybeckstrasse 141**
**CH-4002 Basel (CH)**

(72) Erfinder : **Cseh, Georg, Dr.**
**Praz d'Avant 49**
**CH-1726 Posat (CH)**

(54) **Technische Kunststoffe enthaltend ein Bisazomethin-Metallkomplexpigment.**

(57) Technische Kunststoffe (Engineering Plastics) enthaltend mindestens einen Metallkomplex der Formel

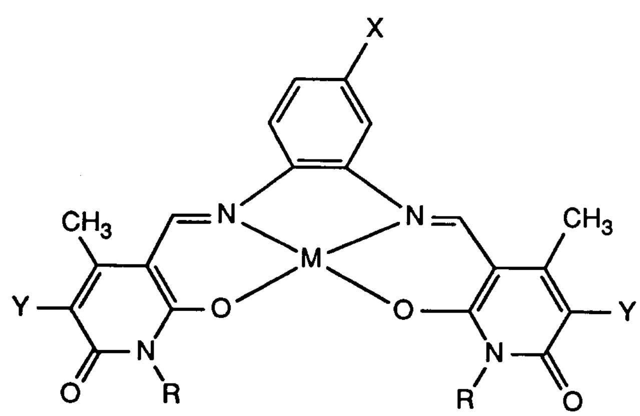

(I),

worin M Nickel oder Kobalt, R $C_2$-$C_4$-Alkyl, X Wasserstoff, Methyl oder Chlor und Y eine Gruppe -CN oder -$CONH_2$ bedeuten.

Sie zeichnen sich durch gute Allgemeinechtheiten sowie durch ausgezeichnete Hitzebeständigkeit aus.

EP 0 475 906 A1

Die vorliegende Anmeldung betrifft mit Metallkomplexen von Bisazomethinverbindungen aus o-Phenylendiaminderivaten und 1 -($C_2$-$C_4$-Alkyl)-2-hydroxy-3-formyl-pyrid-6-on-derivaten pigmentierte technische Kunststoffe (Engineering Plastics).

Metallkomplexe von Bisazomethinverbindungen aus o-Phenylendiaminderivaten und 1-Alkyl-2-hydroxy-3-formyl-pyrid-6-on-derivaten sind aus der DE-OS 2 008 938 als Pigmente zum Färben von Lacken, Druck- oder Anstrichfarben oder Kunststoffen bekannt. Es wird allerdings ausgeführt, dass zum Färben von Kunststoffen diejenigen der obenerwähnten Verbindungen geeignet sind, die als N-Substituent eine längere Alkylkette, wie z.B. Isooctyl, n-Hexyl, Aethoxypropyl, Methoxypropyl oder Isopropoxypropyl aufweisen.

Aehnliche Bisazomethin-Metallkomplexpigmente, die sich von den obenerwähnten nur dadurch unterscheiden, dass der Pyridinstickstoff unsubstituiert ist, sind in der DE-OS 2 533 676 als Pigmente zum Färben von hochmolekularem organischem Material beschrieben.

Der 1: 1-Nickelkomplex aus einem Liganden der Formel

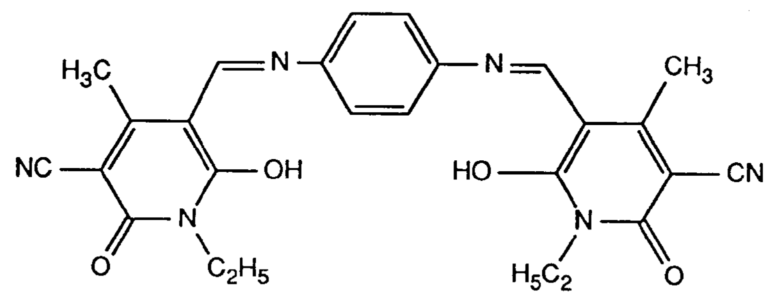

ist in EP-A 354 178, zusammen mit vielen anderen kein Pyridin enthaltenden Produkten, als hitzestabiles, zum Färben von thermoplastischen Kunststoffen geeignetes Pigment beschrieben.

Es ist nun gefunden worden, dass sich Metallkomplexe von Bisazomethinverbindungen aus o-Phenylendiaminderivaten und 1-($C_2$-$C_4$-Alkyl)-2-hydroxy-3-formyl-pyrid-6-on-derivaten, insbesondere dank einer überraschend guten Hitzebeständigkeit und einer ausgezeichneten Dispergierbarkeit, zum Färben von technischen Kunststoffen eignen.

Die vorliegende Erfindung betrifft demnach technische Kunststoffe (Engineering Plastics) enthaltend mindestens einen Metallkomplex der Formel

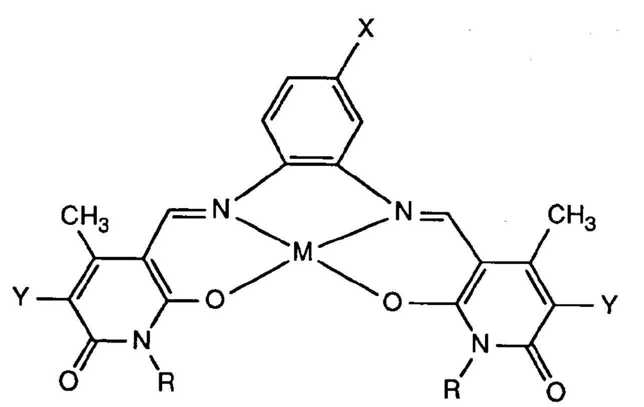

(I),

worin M Nickel oder Kobalt, R $C_2$-$C_4$-Alkyl, X Wasserstoff, Methyl oder Chlor und Y eine Gruppe -CN oder -$CONH_2$ bedeuten.

Unter $C_2$-$C_4$-Alkyl versteht man Ethyl, n-Propyl, Isopropyl, n-Butyl oder sec.-Butyl. Bevorzugt ist n-Butyl.

Technische Kunststoffe, die mit den Metallkomplexen der Formel I pigmentiert werden können, sind z.B. Polycarbonate, Polyester, Polyamide, Polyacrylate, Polymethacrylate, Polyetherketone, Polysulfone, Polyphenylenoxide, Polyurethane, Mischpolymerisate davon, Polypropylen und ABS. Bevorzugt sind Polycarbonate und Polycarbonat enthaltende Mischpolymerisate.

Bevorzugt werden technische Kunststoffe, enthaltend einen Metallkomplex der Formel I, worin R n-Butyl bedeutet, insbesondere wenn zusätzlich M Nickel, X Wasserstoff und Y -CN bedeuten.

Die Metallkomplexe der Formel I sind bekannte Verbindungen (vgl. z.B. DE-OS 2 008 938). Sollten einige davon noch neu sein, so können sie nach bekannten Methoden hergestellt werden.

Je nach Verwendungszweck erweist es sich als vorteilhaft, die erfindungsgemäss in Frage kommenden Metallkomplexe als Toner oder in Form von Präparaten einzusetzen. Bezogen auf den zu pigmentierenden Kunststoff kann man sie z.B. in einer Menge von 0,01 bis 15 Gew.%, vorzugsweise 0,1 bis 5 Gew.% einsetzen.

Die Pigmentierung der technischen Kunststoffe mit den Metallkomplexen der Formel I erfolgt beispielsweise derart, dass man einen solchen Metallkomplex gegebenenfalls in Form von Masterbatches diesen Substraten unter Verwendung von Walzwerken, Misch-oder Mahlapparaten zumischt. Das pigmentierte Material wird hierauf durch eine Verformung in der Hitze nach an sich bekannten Verfahren, wie z.B. Pressen, Giessen oder Spritzguss, in die gewünschte endgültige Form gebracht. Oft ist es erwünscht, zur Verringerung ihrer Sprödigkeit den hochmolekularen Verbindungen vor der Verformung sogenannte Weichmacher einzuverleiben. Als solche können z.B. Ester der Phosphorsäure, Phthalsäure, oder Sebacinsäure dienen. Die Weichmacher können vor oder nach der Einverleibung der Metallkomplexe in die Polymeren eingearbeitet werden. Es ist ferner möglich, zwecks Erzielung verschiedener Farbtöne den Kunststoffen neben den Metallkomplexen der Formel I noch Füllstoffe bzw. andere farbgebende Bestandteile, wie Weiss-, Bunt- oder Schwarzpigmente, in beliebigen Mengen zuzufügen.

Die erhaltenen Ausfärbungen zeichnen sich durch gute allgemeine Eigenschaften, wie z.B. Homogenität, hohe Farbstärke, Transparenz und Farbtonreinheit (je nach Substrat und Pigmentpartikelgrösse), sowie gute Migrations-, Licht- und Wetterbeständigkeit, aus. Bei optimaler Partikelgrösse können die Metallkomplexe der Formel I auch eine hohe Deckfähigkeit aufweisen.

Die nachfolgenden Beispiele dienen zur Erläuterung der Erfindung.

Beispiel 1:

In einer 3 Liter-Glasflasche werden 1 g des Ni-Komplexes der Formel

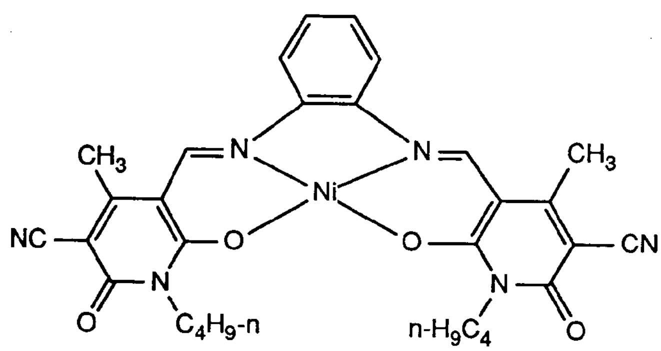

(II),

10 g Titandioxid (Qualität CL 220 der Firma KRONOS Leverkusen BRD) und 1000 g eines Polycarbonats (®Macrolon 2800 der Firma BASF) während 15 Minuten gemischt und während 4 Stunden bei 120°C vorgetrocknet. Die erhaltene Mischung wird zweimal bei 260°C durch einen Kleinextruder (Typ 133 der Firma COLLIN, Ebersberg BRD) gepresst und anschliessend jeweils granuliert. Dann wird das Material während 4 Stunden bei 120°C getrocknet (Granulat-Trockner TE 25 der Firma MAPAG, Bern CH).

Aus dem so gefärbten Granulat werden bei 280°C in einem Spritzautomaten (Aarburg 200 D der Firma AARBURG, Lossburg BRD) Plättchen von ca. 3,5 x 4,5 x 0,2 cm gespritzt. Dann heizt man die Schmelzzone zuerst auf 300°C, dann auf 340°C und spritzt nach jeweils 5 Minuten Verweilzeit weitere Plättchen der oben angegebenen Grösse.

Die bei 280°C, 300°C und 340°C hergestellten Plättchen weisen eine ähnliche gelbe Nuance auf und zeichnen sich durch eine gute Lichtbeständigkeit aus.

Beispiel 2:

In einer 3 Liter-Glasflasche werden 1 g des Ni-Komplexes der Formel II, 10 g Titandioxid (Qualität CL 220 der Firma KRONOS, Leverkusen BRD) und 1000 g des Kunststoffs ABS (®Terluran 877M der Firma BASF) wärhend 15 Minuten gemischt. Die erhaltene Mischung wird zweimal bei 190°C durch einen Kleinextruder (Typ 133 der Firma COLLIN, Ebersberg BRD) gepresst und anschliessend jeweils granuliert. Dann wird das Material während 4 Stunden bei 90°C getrocknet (Granulat-Trockner TE 25 der Firma MAPAG,Bern CH). Aus dem so gefärbten Granulat werden bei 200°C in einem Spritzautomaten (Aarburg 200 D der Firma AARBURG, Lossburg BRD) Plättchen von ca. 3,5 x 4,5 x 0,2 cm gespritzt. Dann heizt man die Schmelzzone auf 260°C und

spritzt nach 5 Minuten Verweilzeit weitere Plättchen der oben angegebenen Dimensionen. Die sowohl bei 200°C als auch bei 260°C hergestellten Plättchen weisen eine ähnliche gelbe Nuance auf und zeichnen sich durch eine gute Lichtbeständigkeit aus.

Beispiel 3:

2 g des Ni-Komplexes der Formel II, 50 g Titandioxid und 1000 g Polyamid 6 (®Ultramid B3K der Firma BASF) werden gut gemischt und 4 Std. bei 120°C vorgetrocknet. Die erhaltene Mischung wird zweimal bei 220°C extrudiert, dann granuliert und wiederum 4 Std. bei 120°C getrocknet. Das so hergestellte gefärbte Granulat wird bei 220°C, 260°C und 280°C, jeweils nach 5-minutigem Verweilen bei diesen Temperaturen zu Plättchen verspritzt. Man erhält farbstarke, gelbe Ausfärbungen mit sehr guter Lichtbeständigkeit.

Beispiel 4:

1 g des Ni-Komplexes der Formel II, 10 g Titandioxid und 1000 g des PC/PBTP-Mischpolymers ®Xenoy (Pulverqualität der Firma GENERAL ELECTRIC, Bergen NL) werden gut gemischt. Die Mischung wird zweimal bei 250°C extrudiert, dann granuliert und bei 120°C während 4 Stunden getrocknet. Das so hergestellte gefärbte Granulat wird bei 260°C, 280°C und 290°C, jeweils nach 5-minutigem Verweilen bei diesen Temperaturen zu Plättchen verspritzt. Man erhält gelbe Ausfärbungen mit sehr guter Lichtbeständigkeit.

Beispiel 5:

1 g des Ni-Komplexes der Formel II, und 1000 g des Kunststoffs Polyethylenterephthalat (PETP, ®Melinor B90 der Firma ICI) werden während 15 Minuten gemischt und während 4 Stunden bei 90°C vorgetrocknet. Die Mischung wird zweimal bei 270°C extrudiert, dann granuliert und wiederum bei 90°C während 4 Stunden getrocknet. Das so hergestellte gefärbte Granulat wird bei 270°C, 280°C, 290°C und 300°C jeweils nach 5-minutigem Verweilen bei diesen Temperaturen zu Plättchen verspritzt. Man erhält gelbe Ausfärbungen mit sehr guter Lichtbeständigkeit.

Beispiele 6- 12:

Ebenfalls echte gelbe bis orange Ausfärbungen in technischen Kunststoffen erhält man, wenn man Beispiel 1 wiederholt, jedoch anstelle des dort verwendeten Pigmentes der Formel II einen 1:1 -Metallkomplex der Formel I, mit den in Tabelle I angegebenen Bedeutungen, einsetzt. Die Nuance der Ausfärbung ist in Kolonne 6 angegeben

Tabelle I

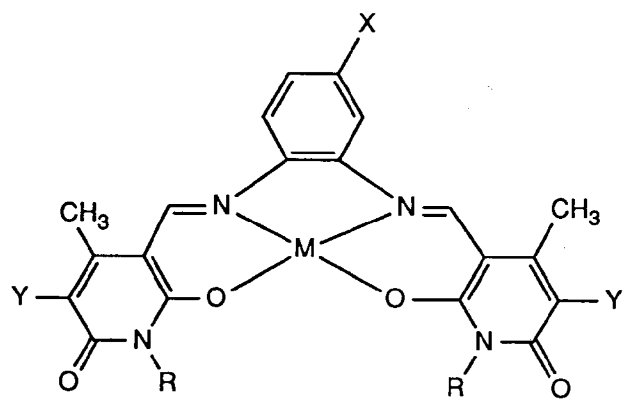

I

| Beispiel Nr. | X | Y | R | M | Nuance in PC |
|---|---|---|---|---|---|
| 6 | Cl | CN | n-Butyl | Ni | gelb |
| 7 | $CH_3$ | CN | n-Butyl | Ni | gelb |
| 8 | H | $CONH_2$ | n-Butyl | Ni | gelb |
| 9 | H | CN | Ethyl | Ni | gelb-orange |
| 10 | Cl | CN | Ethyl | Ni | gelb |
| 11 | $CH_3$ | CN | Ethyl | Ni | gelb |
| 12 | H | $CONH_2$ | Ethyl | Ni | gelb |
| 13 | H | CN | n-Propyl | Ni | gelb |
| 14 | H | CN | n-Butyl | Co | gelb |

**Patentansprüche**

1. Technische Kunststoffe (Engineering Plastics) enthaltend mindestens einen Metallkomplex der Formel

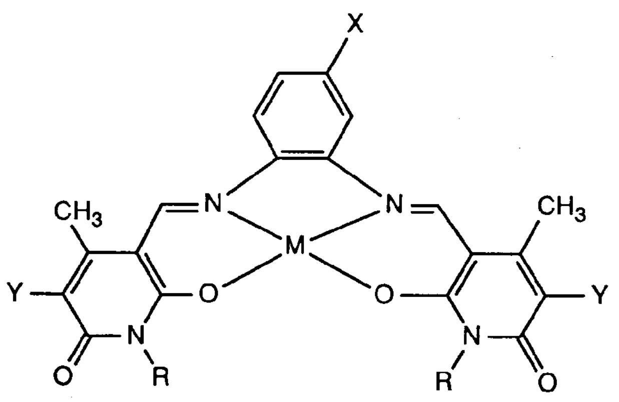

(I),

worin M Nickel oder Kobalt, R $C_2$-$C_4$-Alkyl, X Wasserstoff, Methyl oder Chlor und Y eine Gruppe -CN oder $-CONH_2$ bedeuten.

2. Technische Kunststoffe gemäss Anspruch 1, dadurch gekennzeichnet, dass es sich um Polycarbonate, Polyester, Polyamide, Polyacrylate, Polymethacrylate, Polyetherketone, Polysulfone, Polyphenylenoxide, Polyurethane, Mischpolymerisate davon oder um Polypropylen oder ABS handelt.

3. Technische Kunststoffe gemäss Anspruch 2, dadurch gekennzeichnet, dass es sich um Polycarbonate oder um Polycarbonat enthaltende Mischpolymerisate handelt.

4. Technische Kunststoffe gemäss Anspruch 1, dadurch gekennzeichnet, dass sie einen Metallkomplex der Formel I enthalten, worin R n-Butyl bedeutet.

5. Technische Kunststoffe gemäss Anspruch 4, dadurch gekennzeichnet, dass im Metallkomplex der Formel I M Nickel, X Wasserstoff und Y -CN bedeuten.

Europäisches Patentamt

# EUROPÄISCHER RECHERCHENBERICHT

Nummer der Anmeldung

EP 91810711.1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 5) |
|---|---|---|---|
| D,A | DE - C - 2 533 676 (CIBA-GEIGY AG) * Seite 5, Zeilen 5-15; Tabelle 2; Beispiel 21; Ansprüche * -- | 1-5 | C 08 K 5/3432<br>C 09 B 55/00 |
| D,A | DE - A - 2 008 938 (BADISCHE ANILIN & SODA FABRIK AG) * Seite 2, zweiter Absatz; Beispiele; Ansprüche * -- | 1-5 | |
| D,A | EP - A - 0 354 178 (CIBA-GEIGY AG) * Seite 4, Zeile 56 - Seite 5, Zeile 38; Tablelle 2, Beispiele 39,40; Ansprüche * ---- | 1-5 | |

RECHERCHIERTE SACHGEBIETE (Int Cl 5)

C 08 K
C 08 L 101/00
C 09 B

Der vorliegende Recherchenbericht wurde für alle Patentansprüche erstellt.

| Recherchenort | Abschlußdatum der Recherche | Prüfer |
|---|---|---|
| WIEN | 20-12-1991 | TENGLER |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82